# EUROPEAN PATENT APPLICATION

(11) **EP 3 646 729 A2**
(43) Date of publication of application: **06.05.2020**
(21) Application number: 19205684.4
(22) Date of filing: 28.10.2019
(51) Int. Cl.: A01N 3/00, A01N 41/12, A23L 3/3535, A01N 65/03, A01N 37/06, A01N 43/12, A23B 7/14

(54) **COMPOSITIONS AND METHODS FOR EXTENDING SHELF LIFE OF HARVESTED CROP**

(30) Priority: 29.10.2018 US 201862751728 P
(71) Applicant: Freshgard Ltd., Caesarea (IL)
(72) Inventor: Unna, Ron, Carmel (IL)
(74) Representative: Harrison, Robert John

(57) **Abstract**

The present invention relates to the field of post-harvest treatment of crop, more particularly, the invention relates to compositions and methods for extending shelf life of harvested crop. The invention concerns use of cysteine and optionally, algae, antioxidants, antimicrobial agents and preservatives as the active ingredients capable of extending the shelf life of agriculture produce.

## Description

### FIELD OF THE INVENTION

The present invention relates to the field of post-harvest treatment of crop, more particularly, the invention relates to compositions and methods for extending shelf life of harvested crop. The invention concerns use of cysteine and optionally, algae, antioxidants, antimicrobial agents and/or preservatives as the active ingredients capable of extending the shelf life of agriculture produce.

### BACKGROUND OF THE INVENTION

Proper handling of crops after they have been harvested can extend their storage life and help to retain their flavor, nutrient, and marketability long after being picked. Postharvest technologies attempt to meet the global demands of distribution of fresh produce having high nutritional and sensory quality. Harvested products are metabolically active, undergoing ripening and senescence processes that must be controlled to prolong postharvest quality. Optimal postharvest treatments for fresh produce seek to slow down physiological processes of senescence and maturation, reduce/inhibit development of physiological disorders and minimize the risk of microbial growth and contamination. In addition to basic post-harvest technologies of temperature management, an array of other solutions has been developed including various physical (heat, irradiation and edible coatings), chemical (antimicrobials, antioxidants and anti-browning) and gaseous treatments.

Antimicrobial and anti-browning agents retard browning, deterioration of texture and microbial growth. However inaccessible sites for treatments within fresh produce limit their use.

Antioxidants, whether natural or synthetic inhibit oxidation. It takes a small amount of oxygen to initiate oxidation of a food product. When auto-oxidation starts, free radicals, or chemical by-products, such as peroxides, aldehydes and ketones are formed, leading to chain reactions that may damage cells. These by-products can cause off odors or alter flavors in a food product. Oxidation can also negatively impact the appearance of food, resulting in browning or pigment loss. It can also cause reduction of nutrients such as essential fatty acids and vitamins.

International patent application, publication No. WO/2004/093574 discloses methods for extending the shelf life of harvested plant matter using antioxidant compositions of alkanoyl-L-ascorbic acid esters: 6-octanoyl-L-ascorbate (6-octyl-ascorbate), 6-nonanoyl-L-ascorbate (6-nonyl-ascorbate), and 6-decanoyl-L-ascorbate (6-decyl-ascorbate), and synthesis thereof.

Edible coating provides a partial barrier, minimizes moisture loss, establishes modified atmosphere, preserves color and texture, retains natural aroma. Lack of edible materials with desired properties, and regulatory challenges limit the use of such edible coating. Despite recent achievements, there is still a need in technologies applicable in extending shelf life while preserving the quality of crop, inter alia, due to the rising demand, the development of international trade and the desire to prevent hunger in a world where resources are dwindling.

### SUMMARY OF THE INVENTION

The present invention provides compositions and methods for extending the shelf life of harvested crop. The invention concerns the use of cysteine and/or algae as key active agents in a composition for extending shelf life of plant materials. Advantageously, application of the herein disclosed compositions to harvested crop provides an extended shelf life of agriculture produce.

The present invention discloses for the first time, the finding that cysteine and algae can be effective in extending the shelf life of agriculture produce when provided within a formulation for application onto the harvested crop. The inventors of the invention successfully devised and prepared a composition which can be applied onto harvested crop by spraying or dipping and which effectively inhibits the ripening process of crop post-harvest.

The herein disclosed compositions may be edible and may reduce water loss of crop during storage. In one or more embodiments, the compositions inhibit browning and rot, reduce weight loss of crop, have antibacterial activity, preserve quality (including smell and taste), reduce undesired flavors and odors and maintain the healthy nutritional values of the produce.

According to a first aspect, the present invention provides a composition for extended shelf life of harvested crop, the composition comprises cysteine, and one or more of antioxidants, food preservatives, antimicrobial agents, and algae, in a carrier suitable for application to harvested crop.

In one or more embodiments, the composition is capable of inhibiting the weight loss of the harvested crop. In one or more embodiments, the composition is capable of inhibiting the sugar level loss of the harvested crop. In one or more embodiments, the composition is capable of inhibiting or preventing the browning process of the harvested crop. In one or more embodiments, the composition is capable of inhibiting the change in color of the harvested crop. In one or more embodiments, the composition is capable of inhibiting the change in taste of the harvested crop. In one or more embodiments, the composition is capable of inhibiting the softening process of the harvested crop. In one or more embodiments, the composition is capable of inhibiting the infection and development of molds in the harvested crop.

In one or more embodiments, the antioxidant is selected from the group consisting of: sodium ascorbate, lipoic acid, butylated hydroxyanisole (BHA), butylated hydroxytoluene (BHT), tertiary-butylated hydroquinone (TBHQ), propyl gallate, ascorbic acid, ascorbyl-6-palmitate, a tocopherol, spice extracts which have antioxidant properties, sodium selenite, DL-alpha tocopherol, sodium erythorbate, a sulfite, sodium metabisulfite, glutathione, thioproline, taurine and combinations thereof.

In one or more embodiments, the food preservative is selected from the group consisting of: potassium sorbate, ethylene diamine tetra acetic acid (EDTA), sodium propionate, calcium propionate, benzoic acid, sodium benzoate, sodium bisulfite and combinations thereof.

In one or more embodiments, the antimicrobial agent is selected from the group consisting of sodium caprylate, propionic acid, sorbic acid, benzoic acid, parabens, sulphite, nitrite, diacetate, ethyl formate, ethylene oxide, propylene oxide, dehydroacetic acid, caprylic acid, acetic acid, lactic acid and combinations thereof.

In one or more embodiments, the composition further comprises at least one excipient selected from the group consisting of a flavoring agent, a fragrance agent, a thickening agent, a lubricating agent, a wetting agent, a surface active agent, a solubilizing agent, a coloring agent, a firming and/or sequestering agent, and combinations thereof. In one or more embodiments, the composition comprises at least one excipient selected from the group consisting of arabic gum, calcium chloride, and a combination thereof.

In one or more embodiments, the composition further comprises a coating agent selected from chitosan, starch, arabic gum and a combination thereof.

In one or more embodiments, the composition comprises cysteine in an amount of about 0.1% to about 2%, wherein the percentages are weight percent based on the total weight of the composition and the total weight of the composition equals 100%.

In one or more embodiments, the composition comprises algae in an amount of about 0.05% to about 5%, wherein the percentages are weight percent based on the total weight of the composition and the total weight of the composition equals 100%.

In one or more embodiments, the composition comprises:
cysteine in an amount of at least about 0.1%;
algae in an amount of at least about 0.1% to about 3%;
at least one antioxidant in an amount of at least about 1%; and
a preservative agent or an antimicrobial agent in an amount of at least about 0.1%;
wherein the carrier is water, and wherein the percentages are weight percent based on the total weight of the composition and the total weight of the composition equals 100%.

In one or more embodiments, the composition comprises:
cysteine in an amount of about 0.1% to about 2%;
algae in an amount of about 0.1% to about 3%;
sodium ascorbate in an amount of about 0.1% to about 7%;
potassium sorbate in an amount of about 0.1% to about 4%; and
wherein the carrier is water, and wherein the percentages are weight percent based on the total weight of the composition and the total weight of the composition equals 100%.

In one or more embodiments, the carrier comprises water.

In one or more embodiments, the harvested crop is selected from fruits, vegetables, and flowers, and portions thereof.

In one or more embodiments, the composition is a dosage form selected from the group consisting of a dissolving tablet, a suspension and a solution.

In another aspect the present invention provides a method for enhancing the shelf life of a harvested crop, the method comprising applying onto the harvested crop a composition comprising cysteine, and one or more of antioxidants, food preservatives, antimicrobial agents, and algae, in a carrier suitable for application to harvested crop, wherein the cysteine and/or algae are in an amount sufficient to enhance the shelf life of the harvested crop.

In one or more embodiments, applying the composition onto the harvested crop is performed by a dipping, rolling, brushing, wiping, rubbing, dripping, spraying, atomizing, or a combination thereof.

In one or more embodiments, the composition further comprises a coating agent selected from chitosan, starch and a combination thereof.

In one or more embodiments, the composition comprises cysteine in an amount of about 0.1% to about 2%, and optionally algae in an amount of about 0.05% to about 5%, wherein the percentages are weight percent based on the total weight of the composition and the total weight of the composition equals 100%.

In one or more embodiments, the composition comprises:
cysteine in an amount of at least about 0.1%;
algae in an amount of at least about 0.1% to about 3%;
at least one antioxidant in an amount of at least about 1%; and
a preservative agent in an amount of at least about 0.1%;
wherein the carrier is water, and wherein the percentages are weight percent based on the total weight of the composition and the total weight of the composition equals 100%.

In one or more embodiments, the composition comprises:
cysteine in an amount of about 0.1% to about 2%;
algae in an amount of about 0.1% to about 3%;
sodium ascorbate in an amount of about 0.1% to about 7%;
potassium sorbate in an amount of about 0.1% to about 4%; and
wherein the carrier is water, and wherein the percentages are weight percent based on the total weight of the composition and the total weight of the composition equals 100%.

Unless otherwise defined, all technical or/and scientific terms used herein have the same meaning as commonly understood by one of ordinary skill in the art to which the invention pertains. Although methods and materials similar or equivalent to those described herein can be used in the practice or testing of embodiments of the invention, exemplary methods or/and materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIGs. 1A-1G are bar graphs illustrating weight loss (FIG. 1A), sugar level (FIG. 1B), browning score (FIG. 1C), color score (FIG. 1D), taste score (FIG. 1E), firmness score (FIG. 1F), and appearance of molds (FIG. 1G) in yellow cut apples (designated as APL-1, APL-2, APL-3 and APL-4) treated with the herein disclosed compositions vs. control, according to some embodiments of the invention.
FIGs. 2A-2G are bar graphs illustrating weight loss (FIG. 2A), sugar level (FIG. 2B), browning score (FIG. 2C), color score (FIG. 2D), taste score (FIG. 2E), firmness score (FIG. 2F), and appearance of molds (FIG. 2G) in red cut apples (designated as APL-1, APL-2, and APL-3) treated with the herein disclosed compositions vs. control, according to some embodiments of the invention.
FIGs. 3A-3G are bar graphs illustrating weight loss (FIG. 3A), sugar level (FIG. 3B), browning score (FIG. 3C), color score (FIG. 3D), taste score (FIG. 3E), firmness score (FIG. 3F), and appearance of molds (FIG. 3G) in green cut apples (designated as APL-1, APL-2, APL-3 and APL-4) treated with the herein disclosed compositions vs. control, according to some embodiments of the invention.
FIGs. 4A-4F are bar graphs illustrating weight loss (FIG. 4A), browning score (FIG. 4B), color score (FIG. 4C), taste score (FIG. 4D), firmness score (FIG. 4E), and appearance of molds (FIG. 4F) in cut potatoes (designated as POT-1, POT-2, and POT-3) treated with the herein disclosed compositions vs. control, according to some embodiments of the invention.
FIGs. 5A-5F are bar graphs illustrating weight loss (FIG. 5A), sugar level (FIG. 5B), color score (FIG. 5C), taste score (FIG. 5D), firmness score (FIG. 5E), and appearance of molds (FIG. 5F) in strawberries (designated as STR-1, STR-2, and STR-3) treated with the herein disclosed compositions vs. control, according to some embodiments of the invention.
FIG. 6 are photographs illustrating the effect on decay of strawberries treated with the herein disclosed compositions vs. control strawberries, according to some embodiments of the invention.
FIGs. 7A-7F are bar graphs illustrating weight loss (FIG. 7A), browning score (FIG. 7B), color score (FIG. 7C), taste score (FIG. 7D), firmness score (FIG. 7E), and appearance of molds (FIG. 7F) in chopped lettuce (designated as LEU-1, and LEU-2) treated with the herein disclosed compositions vs. control, according to some embodiments of the invention.
FIG. 8 are photographs illustrating the effect on decay of yellow cut apples treated with a composition having cysteine vs. a composition without cysteine, according to some embodiments of the invention.
FIG. 9 are photographs illustrating the effect on decay of cut potatoes treated with the herein disclosed compositions vs. control potatoes, according to some embodiments of the invention.
FIG. 10 are photographs illustrating the effect on decay of sliced lettuce treated with the herein disclosed compositions vs. control, according to some embodiments of the invention.
FIG. 11 are photographs illustrating the effect on decay of grapes treated with the herein disclosed compositions vs. control, according to some embodiments of the invention.
FIG. 12 are photographs illustrating the effect on decay of avocado treated with the herein disclosed compositions vs. control, according to some embodiments of the invention.
FIG. 13 are photographs illustrating the effect on decay of green apples treated with the herein disclosed compositions vs. control, according to some embodiments of the invention.

It should be appreciated that for simplicity and clarity of illustration, elements shown in the figures have not necessarily been drawn to scale. For example, the dimensions of some of the elements are exaggerated relative to each other for clarity. Further, where considered appropriate, reference numerals have been repeated among the figures to indicate corresponding elements.

### DETAILED DESCRIPTION OF THE INVENTION

It is understood that the invention is not limited to the particular methodology, compositions or products etc., described herein, as these may vary as the skilled artisan will recognize. It is also to be understood that the terminology used herein is used for the purpose of describing particular embodiments only and is not intended to limit the scope of the invention. The invention is not limited to the specifically described products and methods and may be adapted to various applications without departing from the overall scope of the invention. All ranges disclosed herein include the endpoints. The use of the term "or" shall be construed to mean "and/or" unless the specific context indicates otherwise.

The present invention provides compositions and methods for extending the shelf life of harvested crop, including whole and cut fruits and vegetables. The compositions of the invention are particularly suitable for application by spraying or dipping the harvested crop.

Compositions according to some aspects of the invention may be applicable for extending shelf life of fresh fruit products (e.g., melon, strawberry, apple, banana, and citrus), vegetables (e.g., asparagus, potato, lettuce, cabbage, and fresh herbs), "ready to eat" cut or processed products such as sliced lettuce, peeled apples, and sliced potatoes. The compositions may be used to extend the shelf life of ornamental flowers.

The present invention, for the first time, discloses that cysteine is effective in inhibiting the decay process of harvested crop. Optionally, cysteine is formulated with one or more of aquatic algae, antioxidant(s), antimicrobial agent(s), preservative(s) and/or excipients, thereby exhibiting efficient and safe food extending shelf life properties. The herein disclosed compositions may be liquid, semisolid or solid. The liquid formulations may be in the form of a solution or suspension. Conveniently, the compositions may be in the form of a tablet, a powder, or in the form of a film that can be readily dissolved in water or any other polar solvent and provides a homogenous solution suitable for application to the crop.

Among the attributes associated with the herein disclosed compositions are: inhibition of physiological post-harvest disorders (e.g., appearance of spots, dents, browning, injuries), prevention of dehydration, inhibition of ripening, microbial growth suppression, preservation of fresh appearance, extended storage period, suppression of weight loss, suppression of sugar and taste loss, and an extended firmness of the harvested crop. The herein disclosed compositions are further advantageously safe and free of any residual after taste, maintaining the actual natural taste of the crop.

As used herein the term "crop" refers to a whole plant, or a portion, or a component thereof. Exemplary crops relevant to the field of the present invention include fruits, vegetables, and flowers. Further contemplated examples of crop include trees, shrubs, bushes, grass, and moss. Examples of crop as a portion of an entire or whole plant, or, a component thereof, also relevant to the field of the present invention, are leaves, blossoms, beans, seeds, grains, stems, stalks, fibers, and roots. Non limiting examples of crops include, apples, bananas, strawberries, potatoes, grapes, asparagus, melons, lettuce, pumpkin, and avocados. The crops may be optionally cut or sliced.

In one or more embodiments, the crop is harvested crop. In alternative embodiments, the crop is being treated with the herein disclosed compositions prior to being harvested, e.g., just before harvest.

As used herein the term " harvested crop" refers to a whole plant, or a portion, or a component thereof that has been harvested.

The term "harvested" crop refers to any of the above types of crop which has been harvested, i.e., manually, mechanistically, and/or automatically, separated, detached, or removed, such as by pulling or cutting, from the point or location of cultivation, development, or growth, of the plant.

As used herein, the term "amount sufficient to extend the shelf life" refers to an amount of active ingredient which following application to harvested crop, substantially increases the shelf life of the harvested crop.

As used herein, the term "substantially" is interchangeable with the term "statistically substantially".

As used herein, the term "substantially free" refers to a compound or composition comprising less than about 0.5%, or less than about 0.4%, or less than about 0.3%, or less than about 0.2%, or less than about 0.1%, or any percentage in between of a particular compound.

As used herein, the term "essentially free" refers to a compound or composition comprising less than about 0.05%, or less than about 0.04%, or less than about 0.03%, or less than about 0.02%, or less than about 0.01%, or less than about 0.005%, or any percentage in between, or having only trace amounts of a particular compound or of other compounds.

As used herein, the terms "composition(s)" and "formulation(s)" can be interchangeable depending on the context in which they are used as would be appreciated by a person skilled in the art.

All % values are provided on a weight (w/w) basis.

Cysteine is a polar uncharged, non-essential amino acid. In metabolism, cysteine constitutes the almost exclusive metabolic entrance for reduced sulfur into cell metabolism where it is required for biosynthesis of essential compounds including methionine, thiamine, biotin, coenzyme A, and Fe/S clusters. Cysteine also plays crucial roles in protein folding, assembly, and stability through disulfide-bond formation as well as in cellular processes such as redox cycles, detoxification of heavy metals and xenobiotics, and metabolism of secondary products. Cysteine contains thiols which undergo redox reactions, allowing the antioxidant properties of cysteine.

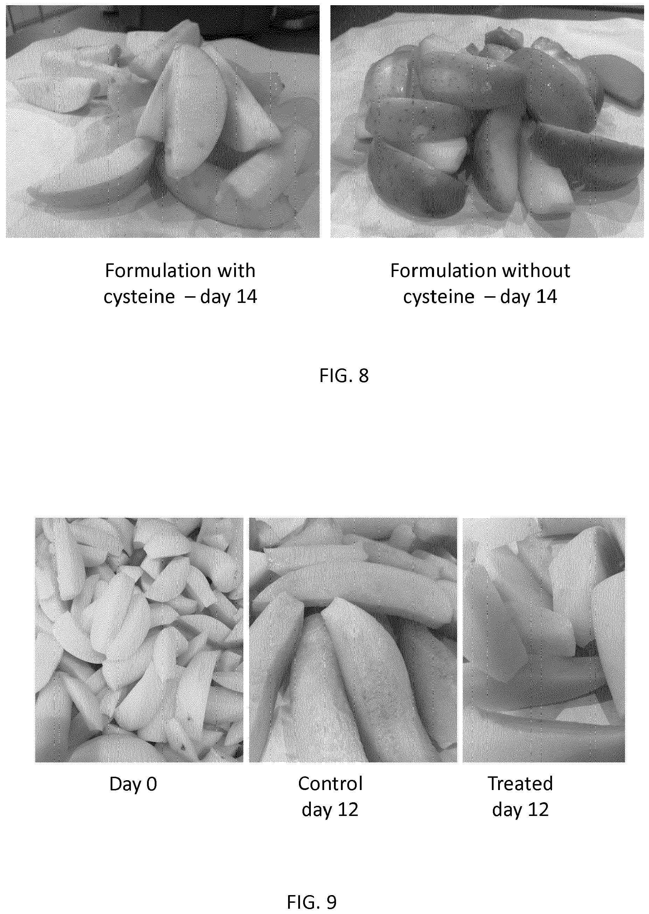

As illustrated herein in Example 7 and FIG. 8, cysteine is an essential ingredient in the compositions of the present invention, allowing an extended shelf life of harvested crop. In one or more embodiments, cysteine is present in the composition in an amount of at least about 0.1% by weight of the composition. For example, at least about 0.15%, at least about 0.2%, or at least about 0.25% by weight of the composition. In one or more embodiments, cysteine is present in the composition in an amount of up to about 5%, for example, up to about 4%, up to about 3%, up to about 2.5%, up to about 2%, up to about 1.5%, or up to about 1% by weight of the composition. In one or more embodiments, cysteine is present in the composition at about 0.15% to about 2% by weight of the composition. For example, cysteine is present in the composition at about 0.2% to about 1.5%, or at about 0.25% to about 1% by weight of the composition.

In one or more embodiments, the cysteine is N-Acetyl-L-cysteine.

Algae constitute a large, diverse group of photosynthetic organisms. Included organisms range from unicellular microalgae, such as chlorella and the diatoms, to multicellular forms, such as the giant kelp. Most are aquatic and autotrophic and lack many of the distinct cell and tissue types, such as stomata, xylem, and phloem, which are found in land plants. Marine-algae and cyanobacteria have been identified as a rich source of structurally diverse biomolecules. Of which, many have been recognized to bear antioxidant activity.

In one or more embodiments, algae are present in the composition in an amount of at least about 0.05% by weight of the composition. For example, at least about 0.075%, or at least about 0.1% by weight of the composition. In one or more embodiments, algae are present in the composition in an amount of up to about 5%, for example, up to about 4%, or up to about 3% by weight of the composition. In one or more embodiments, algae are present in the composition at about 0.05% to about 5% by weight of the composition. For example, algae is present in the composition at about 0.075% to about 4%, or at about 0.1% to about 3% by weight of the composition. In one or more embodiments, the algae is green aquatic algae which may be provided as a powder.

The herein compositions may include one or more of an antioxidant agent. According to some embodiments, disclosed herein are compositions substantially free or essentially free or free of an antioxidant. Oxidation is a chemical reaction that can produce free radicals, thereby leading to chain reactions that may damage the cells of organisms. Antioxidants are compounds that inhibit oxidation. Non limiting examples of antioxidant agents are selected from the group consisting of sodium ascorbate, alkanoyl-L-ascorbic acid esters (e.g., 6-octanoyl-L-ascorbate (6-octyl-ascorbate), 6-nonanoyl-L-ascorbate (6-nonyl-ascorbate), and 6-decanoyl-L-ascorbate (6-decyl-ascorbate)), lipoic acid, butylated hydroxyanisole (BHA), butylated hydroxytoluene (BHT), tertiary-butylated hydroquinone (TBHQ), propyl gallate, ascorbic acid, ascorbyl-6-palmitate, sodium metabisulfite, tocopherols (e.g., α-tocopherol and DL-alpha tocopherol), spice extracts which have antioxidant properties, sodium selenite, a combination of dithioerythreitol and DL-alpha tocopherol, sodium erythorbate. Sulfurous acid salts and organic esters (referred to collectively as "sulfites") are also effective antioxidants, such as bisulfites, pyrosulfites, metabisulfites, and sulfites and combinations thereof. Further exemplary antioxidants include sulfur-containing antioxidants such as sodium metabisulfite, glutathione, thioproline, and taurine. According to some embodiments, disclosed herein are compositions substantially free or essentially free or free of an alkanoyl-L-ascorbic acid ester.

In one or more embodiments, an antioxidant is present in the composition in an amount of at least about 0.05% by weight of the composition. For example, at least about 0.1%, or at least about 0.14%, or at least about 0.5%, or at least about 1%, or at least about 2%, or at least about 3% by weight of the composition. In one or more embodiments, an antioxidant is present in the composition in an amount of up to about 10%, for example, up to about 7%, or up to about 6%, or up to about 5% by weight of the composition. In one or more embodiments, antioxidant is present in the composition at about 0.05% to about 10% by weight of the composition. For example, an antioxidant is present in the composition at about 0.14% to about 6%, or at about 1% to about 5%, or at about 0.14% to about 3%, or at about 0.14% to about 1%, by weight of the composition. In an exemplary embodiment, the antioxidant is sodium ascorbate, wherein the sodium ascorbate is present in the composition in an amount of between about 1% and about 5%, between about 0.1% and about 7%, or between about 2% and about 4%. In an exemplary embodiment, the antioxidant is lipoic acid, wherein the lipoic acid is present in the composition in an amount of between about 0.14% and about 1%, between about 0.1% and about 2%, or between about 0.2% and about 1%.

The herein compositions may include one or more of an antimicrobial agent. According to some embodiments, disclosed herein are compositions substantially free or essentially free or free of an antimicrobial agent. An antimicrobial compound or agent is capable of eradicating microorganisms, inhibiting or terminating their growth. Non limiting examples of antimicrobial agents are selected from the group consisting of sodium caprylate, propionic acid, sorbic acid, benzoic acid, parabens, sulphite, nitrite, diacetate, ethyl formate, ethylene oxide, propylene oxide, dehydroacetic acid, caprylic acid, acetic acid, lactic acid, and combinations thereof.

In one or more embodiments, an antimicrobial agent is present in the composition in an amount of at least about 0.1% by weight of the composition. For example, at least about 0.2%, or at least about 0.5% by weight of the composition. In one or more embodiments, an antimicrobial agent is present in the composition in an amount of up to about 10%, for example, up to about 7%, or up to about 6%, or up to about 5%, or up to about 4%, or up to about 3% by weight of the composition. In one or more embodiments, an antimicrobial agent is present in the composition at about 0.05% to about 10% by weight of the composition. For example, an antimicrobial agent is present in the composition at about 0.1% to about 6%, or at about 0.2% to about 4% by weight of the composition. In an exemplary embodiment, the antimicrobial agent is sodium caprylate, wherein the sodium caprylate is present in the composition in an amount of between about 0.5% and 1%, between about 0.1% and 2%, or between about 0.6% and 1%.

The herein compositions may include one or more of a preservative. According to some embodiments, disclosed herein are compositions substantially free or essentially free or free of a preservative agent. Food preservatives constitute a group of compounds of widely different molecular structures; they are organic and inorganic substances with different functional groups and tendencies to form ions. Those compounds typically prevent deterioration from enzymes, microorganisms, and exposure to oxygen. Food preservatives may have antioxidant and/or antimicrobial properties. Non limiting examples of preservatives are selected from the group consisting of potassium sorbate, ethylene diamine tetra acetic acid (EDTA), sodium propionate, calcium propionate, benzoic acid, sodium benzoate, sodium bisulfite, and combinations thereof

In one or more embodiments, a preservative agent is present in the composition in an amount of at least about 0.01% by weight of the composition. For example, at least about 0.03%, or at least about 0.05%, or at least about 0.1%, or at least about 0.2% by weight of the composition. In one or more embodiments, a preservative agent is present in the composition in an amount of up to about 10%, for example, up to about 7%, or up to about 6%, or up to about 5%, or up to about 4%, or up to about 3%, or up to about 2%, or up to about 1% by weight of the composition. In one or more embodiments, a preservative agent is present in the composition at about 0.01% to about 10% by weight of the composition. For example, a preservative agent is present in the composition at about 0.1% to about 6%, or at about 0.2% to about 5% by weight of the composition. In an exemplary embodiment, the preservative agent is EDTA, wherein the EDTA is present in the composition in an amount of between about 0.05% and 1%, or between about 0.01% and about 2%, or between about 0.07% and about 1%. In an exemplary embodiment, the preservative agent is potassium sorbate, wherein the potassium sorbate is present in the composition in an amount of between about 0.2% and 3%, or between about 0.1% and about 4%, or between about 0.6% and about 2%.

In one or more embodiments, the herein disclosed compositions, of the present invention, include at least one additional component or excipient, for improving the physicochemical properties, characteristics, behavior, and activity, of the composition, and therefore, for further improving the effectiveness of the composition for use in extending the shelf life of the harvested crop. In one or more embodiments, in a non-limiting manner, at least one additional component or excipient selected from the group consisting of a coloring agent, a sweetening agent, a flavoring agent, a fragrance agent, dispersing agent, an emulsifier, an acidulant, a plasticizer, a complexing agent, a protein, a thickening agent and combinations thereof.

Exemplary dispersing agents are selected from the group consisting of carboxymethylcellulose (CMC), hydroxypropyl cellulose (HPC), hydroxypropyl methylcellulose (HPMC), methyl cellulose (MC), guar gum, locust bean gum, pectin, xanthan gum, modified starch, carrageenan, gum arabic, and combinations thereof. Exemplary emulsifiers are selected from the group consisting of monoglycerides, diglycerides, glycol esters of fatty acids, polyglycol esters of fatty acids, polyoxyethylene sorbitan oleates, polyoxyethylene sorbitan stearates, polyoxyethylene sorbitan laurates, lecithins, and combinations thereof.

Exemplary acidulants are selected from the group consisting of citric acid, propionic acid, lactic acid, gluconic acid, succinic acid, tartaric acid, fumaric acid, ascorbic acid, and combinations thereof.

Exemplary plasticizers are selected from the group consisting of polyethylene glycol, glycerol, propylene glycol, carnauba wax, candellila wax, stearic acid, oleic acid, sorbitol, soybean oil, beeswax, mannitol, and combinations thereof.

Exemplary complexing agents are selected from the group consisting of citric acid, cyclodextrins, acidic polyphosphates, and combinations thereof.

Exemplary firming and/or sequestering agents are selected from the group consisting of calcium chloride, calcium gluconate, calcium lactate, citric acid and a salt thereof, ethylenediamine tetraacetic acid and a salt thereof, and combinations thereof. In one or more embodiments, calcium chloride is present in the composition in an amount of between about 0.1% and about 4, between about 0.3% and about 1%, or between about 0.2% and about 1%.

The term "thickening agent" in the context of the present disclosure is an agent which modulates the viscosity or thickness of a formulation. According to the present disclosure, the viscosity-modifying agent can be selected from a semi-solid or a solid wax component (e.g., a paraffin wax, a fatty alcohol, a fatty acid and a starch). Exemplary proteins are selected from the group consisting of soy protein, whey, casein, gelatin, zein, and combinations thereof.

In one or more embodiments, the herein disclosed compositions further include one or more of a coating agent for further improving the shelf life of the harvested crop. Exemplary coatings are selected from the group consisting of arabic gum, chitosan, starch and combinations thereof. In one or more embodiments, arabic gum is present in the composition in an amount of 1% to about 6%, about 2% to about 5%, or about 3% to 4%. In certain exemplary embodiments, chitosan coatings can prevent the decay of food products, being an efficient technique to prolong their shelf life and maintain the freshness. Chitosan coatings can control the internal gas atmosphere of fruits and vegetables, reducing the respiration and transpiration rates, thereby retarding the ripening process. In one or more embodiments, chitosan is present in the composition in an amount of 0.1% to about 6%, about 0.5% to about 5%, or about 0.6% to 4%, or about 3% to about 4%. In one or more embodiments, starch is present in the composition in an amount of 1% to about 6%, about 0.5% to about 5%, or about 0.6% to 4%, or about 2% to about 5%.

Various aroma (fragrance and/or flavor) agents are contemplated to allow an improved fragrance and/or flavor. Non limiting examples of aroma agents include, without limitation, isoamyl acetate, methyl butyrate, isobutyl-3-(methyl thio) butyrate, dipropylene glycol (e.g., DMS 10% in dipropylene glycol), methyl sulfide, aldehyde C25 melon, isobutyl hexanoate, saccharin sodium, glycyrrhizin, malt syrup, citric acid, tartaric acid, menthol, lemon oil, citrus flavor, a terpene, a terpenoid, and any combination thereof.

The amount of aroma agent may vary depending on the desired intensity of scent and/or flavor. In an exemplary embodiment, the aroma agent is present in the compositions in an amount of at least about 01% by weight of the composition. For example, at least about 0.3% or at least about 0.5% by weight of the composition. The amount of aroma agent may vary between about 0.1% and about 10%, or between about 0.5% and about 5%, or between about 0.3% and about 5%.

In one or more embodiments, isoamyl acetate is present in the composition in an amount of 0.1% to about 6%, about 0.1% to 4%, about 0.6% to 2%, about 0.5% to about 5%, or about 0.6% to 4%, or about 0.5% to about 3%. In one or more embodiments, isobutyl-3-(methyl thio) butyrate is present in the composition in an amount of 0.1% to about 4%, about 0.6% to 2%, about 0.5% to about 5%, or about 0.6% to 4%, or about 0.5% to about 3%. In one or more embodiments, DMS 10% in dipropylene glycol is present in the composition in an amount of 0.1% to about 4%, about 0.6% to 2%, about 0.5% to about 5%, or about 0.6% to 4%, or about 0.5% to about 3%. In one or more embodiments, isobutyl hexanoate is present in the composition in an amount of 0.1% to about 4%, about 0.6% to 2%, about 0.5% to about 5%, or about 0.6% to 4%, or about 0.5% to about 3%. In one or more embodiments, methyl sulfide is present in the composition in an amount of 0.1% to about 4%, about 0.6% to 2%, about 0.5% to about 5%, or about 0.6% to 4%, or about 0.5% to about 3%. In one or more embodiments, aldehyde C25 melon is present in the composition in an amount of 0.1% to about 4%, about 0.6% to 2%, about 0.5% to about 5%, or about 0.6% to 4%, or about 0.5% to about 3%.

In one or more embodiments, the herein disclosed ingredients are solubilized or admixed within a carrier or solvent which may be a polar solvent selected from the group consisting of water, an alcohol, a polar glycol, and combinations thereof. An exemplary alcohol is selected from the group consisting of ethanol, propanol, and combinations thereof. An exemplary glycol is selected from the group consisting of propylene glycol, ethylene glycol, and combinations thereof. In one or more embodiments, the carrier is water.

### Exemplary compositions and pharmaceutical formulations

The present disclosure provides compositions with active agent suitable for extending the shelf life of harvested crop.

According to certain embodiments, the composition comprises:
cysteine in an amount of at least about 0.1%;
an antioxidant in an amount of at least about 0.5%;
an antimicrobial agent or a preservative agent in an amount of at least about 0.2%; and optionally an aroma agent in a carrier; wherein the percentages are weight percent based on the total weight of the composition and the total weight of the composition equals 100%.

In one or more embodiments, the composition further comprises algae in an amount of at least about 0.1%.

In one or more embodiments, the composition further comprises a coating agent in an amount of at least about 0.5%. In an exemplary embodiment, the coating agent is chitosan.

In one or more embodiments, the composition further comprises an aroma agent in an amount of at least about 0.5% by weight of the composition. In one or more embodiments, the aroma agent is selected from the group consisting of methyl butyrate, isoamyl acetate, isobutyl-3-(methyl thio) butyrate, dipropylene glycol, isobutyl hexanoate, methyl sulfide and aldehyde C25 melon.

According to one embodiment, the antioxidant agent is selected from the group consisting of sodium ascorbate and lipoic acid.

According to one embodiment, the antimicrobial agent is sodium caprylate.

According to one embodiment, the preservative agent is selected from the group consisting of potassium sorbate and EDTA.

According to some embodiments, the composition comprises at least one excipient selected from the group consisting of calcium chloride, arabic gum, and starch.

According to a further embodiment, the purified water is in an amount of about 30% to 98% of the composition. In certain embodiments, the purified water is in an amount of about 40% to 98%, about 40% to 90%, about 60% to 98% of the composition, or amount of about 70% to 95% of the composition.

In an exemplary embodiment, the composition is suitable for application to apples, said composition comprises
an antioxidant in an amount of at least about 1%;
a preservative in an amount of at least about 0.2%;
cysteine in an amount of at least about 0.25%;
an excipient in an amount of at least about 0.25%;
algae in an amount of at least about 0.1%;
an aroma agent in an amount of at least about 0.5%; and
purified water to 100%

In an exemplary embodiment, the composition is suitable for application to apples, said composition comprises
sodium ascorbate in an amount of between about 1% and about 5%;
potassium sorbate in an amount of between about 0.2% and about 3%;
cysteine in an amount of between about 0.25% and about 1%
calcium chloride in an amount of between about 0.2% and about 1%;
algae in an amount of between about 0.1% and about 3%;
methyl butyrate in an amount of at least about 0.5%; and
purified water to 100%.

In an exemplary embodiment, the composition is suitable for application to banana, said composition comprises
sodium ascorbate in an amount of between about 1% and about 5%;
potassium sorbate in an amount of between about 0.2% and about 3%;
cysteine in an amount of between about 0.25% and about 1%;
algae in an amount of between about 0.1% and about 3%;
lipoic acid in an amount of between about 0.14% and about 1%;
sodium caprylate in an amount of between about 0.5% and about 1%;
arabic gum in an amount of between about 2% and about 5%;
EDTA in an amount of between about 0.05% and about 1%;
calcium chloride in an amount of between about 0.2% and about 1%;
isoamyl acetate in an amount of between about 0.5% and about 3%; and
purified water to 100%.

In an exemplary embodiment, the composition is suitable for application to strawberry, said composition comprises
sodium ascorbate in an amount of between about 1% and about 5%;
potassium sorbate in an amount of between about 0.2% and about 3%;
cysteine in an amount of between about 0.25% and about 1%;
algae in an amount of between about 0.1% and about 3%;
calcium chloride in an amount of between about 0.2% and about 1%;
sodium caprylate in an amount of between about 0.5% and about 1%;
arabic gum in an amount of between about 2% and about 5%;
isobutyl-3-(methyl thio) butyrate in an amount of between about 0.5% and about 3%; and
purified water to 100%.

In an exemplary embodiment, the composition is suitable for application to potatoes, said composition comprises
sodium ascorbate in an amount of between about 1% and about 5%;
potassium sorbate in an amount of between about 0.2% and about 3%;
calcium chloride in an amount of between about 0.2% and about 1%;
cysteine in an amount of between about 0.25% and about 1%;
algae in an amount of between about 0.1% and about 3%;
arabic gum in an amount of between about 2% and about 5%;
DMS 10% in dipropylene glycol in an amount of between about 0.5% and about 3%; and
purified water to 100%.

In an exemplary embodiment, the composition is suitable for application to grapes, said composition comprises
sodium ascorbate in an amount of between about 1% and about 5%;
potassium sorbate in an amount of between about 0.2% and about 3%;
lipoic acid in an amount of between about 0.14% and about 1%;
cysteine in an amount of between about 0.25% and about 1%;
algae in an amount of between about 0.1% and about 3%;
sodium caprylate in an amount of between about 0.5% and about 1%;
EDTA in an amount of between about 0.05% and about 2%;
isobutyl hexanoate in an amount of between about 0.5% and about 3%; and
purified water to 100%.

In an exemplary embodiment, the composition is suitable for application to asparagus, said composition comprises
sodium ascorbate in an amount of between about 1% and about 5%;
potassium sorbate in an amount of between about 0.2% and about 3%;
EDTA in an amount of between about 0.05% and about 2%;
lipoic acid in an amount of between about 0.14% and about 1%;
cysteine in an amount of between about 0.25% and about 1%;
algae in an amount of between about 0.1% and about 3%;
calcium chloride in an amount of between about 0.2% and about 1%;
chitosan in an amount of between about 0.5% and about 5%;
methyl sulfide in an amount of between about 0.5%; about 3%; and
purified water to 100%.

In an exemplary embodiment, the composition is suitable for application to melon, said composition comprises
sodium ascorbate in an amount of between about 1% and about 5%;
potassium sorbate in an amount of between about 0.2% and about 3%;
lipoic acid in an amount of between about 0.14% and about 1%;
sodium caprylate in an amount of between about 0.5% and about 1%;
arabic gum in an amount of between about 2% and about 5%;
cysteine in an amount of between about 0.25% and about 1%;
algae in an amount of between about 0.1% and about 3%;
EDTA in an amount of between about 0.05% and about 1%;
calcium chloride in an amount of between about 0.2% and about 1%;
aldehyde C25 melon in an amount of between about 0.5% and about 3%; and purified water to 100%.

In an exemplary embodiment, the composition is suitable for application to lettuce, said composition comprises
sodium ascorbate in an amount of between about 1% and about 5%;
cysteine in an amount of between about 0.25% and about 1%;
lipoic acid in an amount of between about 0.14% and about 1%;
algae in an amount of between about 0.1% and about 3%;
starch in an amount of between about 2% and about 5%;
potassium sorbate in an amount of between about 0.2% and about 3%; and purified water to 100%.

In an exemplary embodiment, the composition is suitable for application to pumpkin, said composition comprises
sodium Ascorbate in an amount of between about 1% and about 5%;
potassium Sorbate in an amount of between about 0.2% and about 3%;
cysteine in an amount of between about 0.25% and about 1%;
calcium chloride in an amount of between about 0.2% and about 1%;
algae in an amount of between about 0.1% and about 3%; and
purified water to 100%.

The compositions of the invention are prepared, according to the following steps of: (a) weighing a predetermined quantity of the active ingredients, (b) placing the ingredients into an appropriate beaker or container; (c) adding an appropriate quantity of the previously described carrier, e.g., water, to the beaker or container; and (d) mixing or dispersing the active ingredients throughout the solvent until a solution or suspension is formed. The solution or suspension composition is then stored at room temperature, and is ready for applying, preferably, by a dipping, spraying, or brushing, procedure, onto the harvested crop.

A wide variety of different procedures, such as drying, room temperature storage, low temperature or cold storage, handling, processing, and/or, eventual shelf display and sale, of the treated harvested crop, are used following the dipping or spraying treatment of the present invention. Specific procedures and conditions thereof depend upon the particular harvested crop.

The method for extending the shelf life of harvested crop, as herein disclosed, is based on the step of applying onto the harvested crop an effective amount of a composition comprising cysteine, and optionally algae, antioxidants antimicrobial agent(s), excipients, and other preservatives, thereby extending the shelf life of the harvested crop.

In one or more embodiments, the composition for use in extending the shelf life of harvested crop, of the present invention, is a solution or suspension. In one or more embodiments, applying the composition of the invention onto the harvested crop is performed by various ways. For example, applying the composition is performed by dipping or spraying procedure performed at room temperature, during which the harvested crop is subjected or exposed to the applied composition for a time period of between a few seconds and up to about a few hours. Alternatively, the composition is brushed on the harvested crop using a suitable brush.

Each of the following terms: 'includes', 'including', 'has', 'having', 'comprises', and 'comprising', and, their linguistic, as used herein, means 'including, but not limited to', and is to be taken as specifying the stated component(s), feature(s), characteristic(s), parameter(s), integer(s), or step(s), and does not preclude addition of one or more additional component(s), feature(s), characteristic(s), parameter(s), integer(s), step(s), or groups thereof. Each of these terms is considered equivalent in meaning to the phrase 'consisting essentially of'.

Each of the phrases 'consisting of and 'consists of, as used herein, means 'including and limited to'.

The term 'method', as used herein, refers to steps, procedures, manners, means, or/and techniques, for accomplishing a given task including, but not limited to, those steps, procedures, manners, means, or/and techniques, either known to, or readily developed from known steps, procedures, manners, means, or/and techniques, by practitioners in the relevant field(s) of the disclosed invention.

Throughout this disclosure, a numerical value of a parameter, feature, characteristic, or dimension, may be stated or described in terms of a numerical range format. Such a numerical range format, as used herein, illustrates implementation of some exemplary embodiments of the invention, and does not inflexibly limit the scope of the exemplary embodiments of the invention. Accordingly, a stated or described numerical range also refers to, and encompasses, all possible sub-ranges and individual numerical values (where a numerical value may be expressed as a whole, integral, or fractional number) within that stated or described numerical range. For example, a stated or described numerical range 'from 1 to 6' also refers to, and encompasses, all possible sub-ranges, such as 'from 1 to 3', 'from 1 to 4', 'from 1 to 5', 'from 2 to 4', 'from 2 to 6', 'from 3 to 6', etc., and individual numerical values, such as '1', '1.3', '2', '2.8', '3', '3.5', '4', '4.6', '5', '5.2', and '6', within the stated or described numerical range of 'from 1 to 6'. This applies regardless of the numerical breadth, extent, or size, of the stated or described numerical range.

Moreover, for stating or describing a numerical range, the phrase 'in a range of between about a first numerical value and about a second numerical value', is considered equivalent to, and meaning the same as, the phrase 'in a range of from about a first numerical value to about a second numerical value', and, thus, the two equivalently meaning phrases may be used interchangeably.

It is to be fully understood that certain aspects, characteristics, and features, of the invention, which are, for clarity, illustratively described and presented in the context or format of a plurality of separate embodiments, may also be illustratively described and presented in any suitable combination or sub-combination in the context or format of a single embodiment. Conversely, various aspects, characteristics, and features, of the invention which are illustratively described and presented in combination or sub combination in the context or format of a single embodiment, may also be illustratively described and presented in the context or format of a plurality of separate embodiments. Although the invention has been described in conjunction with specific embodiments thereof, it is evident that many alternatives, modifications, and variations will be apparent to those skilled in the art. Accordingly, it is intended to embrace all such alternatives, modifications, and variations that fall within the spirit and broad scope of the appended claims.

All publications, patents, and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

By the term "about" herein it is meant as indicated above and also that a figure or range of figures can vary in an embodiment plus or minus up to 20%. For example, if an amount of "about 2" is provided, then the amount can reflect a variation of from 1.6 up to 2.4. In further embodiments, it can describe a variation of plus or minus 10%, in which case "about 1" can reflect a variation of from 0.9 up to 1.1. As will be appreciated by one skilled in the art in cases where "about X" will lead to a figure of above 100%, the term in one or more embodiments can be read as reflecting up to 100% by weight less the total of the minimum amount of the other ingredients. Likewise, it will be appreciated by one skilled in the art to the extent X is reduced from that upper level the amounts of the other ingredients are increased appropriately. As will be appreciated by one of skill in the art, there is some reasonable flexibility in formulating compositions such that where one or more ingredients are varied, successful formulations can still be made even if an amount falls slightly outside the range. Therefore, to allow for this possibility, amounts are qualified by about. In one or more other embodiments, the figures can be read without the term "about."

Having now generally described the invention, the same will be more readily understood through reference to the following examples, which are provided by way of illustration and are not intended to be limiting of the present invention.

### EXAMPLES

The invention will be described in detail by way of specific examples. The following examples are offered for illustrative purposes and are not intended to limit the invention in any manner. Those of skill in the art will readily recognize a variety of non-critical parameters, which can be changed or modified to yield essentially the same results. In one or more embodiments, the amounts in the examples should be read with the prefix "about".

### Tests

By way of non-limiting examples, the objectives of characterization tests are briefly set out below as would be appreciated by a person of the art.

### Weight loss measurement

Weight loss was measured using a weight measurement device.

### Sugar level

Sugar level of tested crop was measured using a refractometer. Sugar levels are presented with the values of degrees Brix (symbol °Bx) and thereby refer to the sugar content of an aqueous solution.

### Browning test

Browning change is assessed by visual inspection when tested crop gets brown from its original appearance. Browning scoring is made on a scale decreasing from 10 to 0 wherein 10 reflects an original state of a non-brown crop and 0 reflects completely brown crop. Scores of below 5 are related to crop that cannot be merchandised.

### Color test

Color change is assessed by visual inspection when tested crop changes color from its original appearance. Color scoring is made on a scale decreasing from 10 to 1 wherein 10 reflects an original color and 1 reflects completely changed color.

### Taste test

Taste change is assessed by taste inspection. Taste scoring is made on a scale decreasing from 10 to 0, wherein 10 reflects a fresh crop taste and 0 reflects a rotten taste.

### Firmness test

Firmness of crop was assessed using a fruit hardness tester. Firmness scoring is made on a scale decreasing from 10 to 0, wherein 10 reflects a very firm crop and 0 reflects a very soft crop.

### Mold test

Mold presence is assessed by visual inspection when tested crop is afflicted with mold. Mold scoring is made on a scale decreasing from 10 to 0, wherein 10 reflects a crop without any molds and 0 reflects a crop covered completly with mold.

### Method of manufacture of the herein disclosed formulations

Compounds were weighed, dissolved in water and mixed until reaching a homogenous mixture solution or suspension. The obtained formulation was then filtered to remove non-water-soluble residuals. The obtained solution was used for dipping or spraying thereof onto harvested crop.

### Example 1 - evaluated shelf life parameters of yellow cut apples

Formulations comprising cysteine, algae, antioxidants, food preservatives and the fragrance agent methyl butyrate in concentrations within the range as specified herein below in formulation #1 were prepared and applied onto yellow cut apples. Weight loss, sugar level, browning level, color, taste, firmness, and molds were evaluated in the yellow cut apples during a period of 12 days at 5°C post treatment and were compared to control (cut apples were dipped into water).

The following formulation #1 contains:
sodium ascorbate 1%-5%
potassium sorbate 0.2%-3%
cysteine 0.25%-1%
calcium chloride 0.2%-1%
algae 0.1-3%
methyl butyrate 0.5%-3%; and
purified water to 100%.

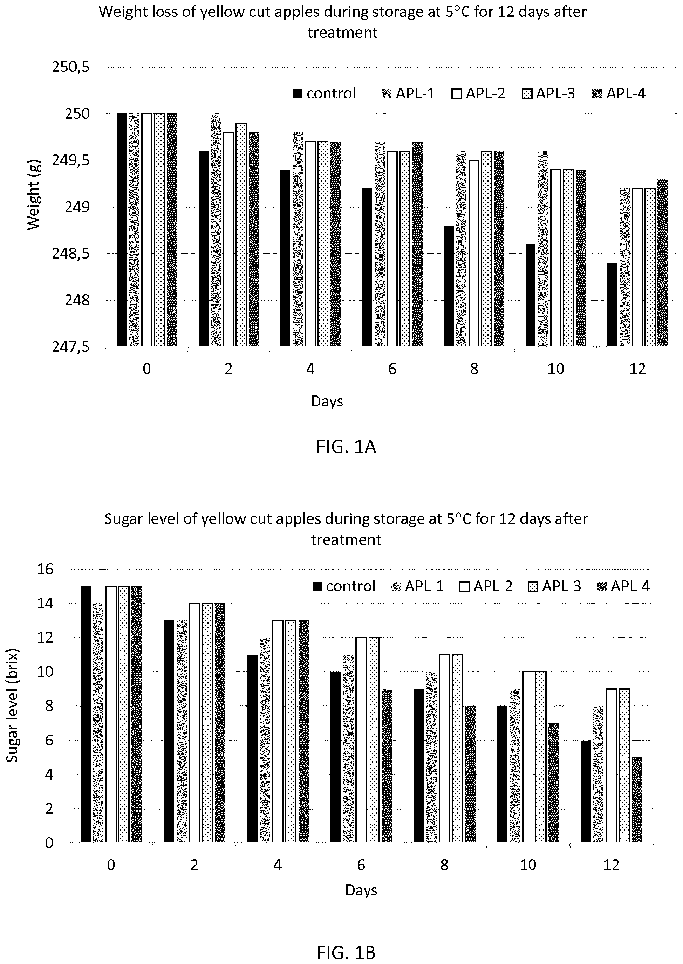

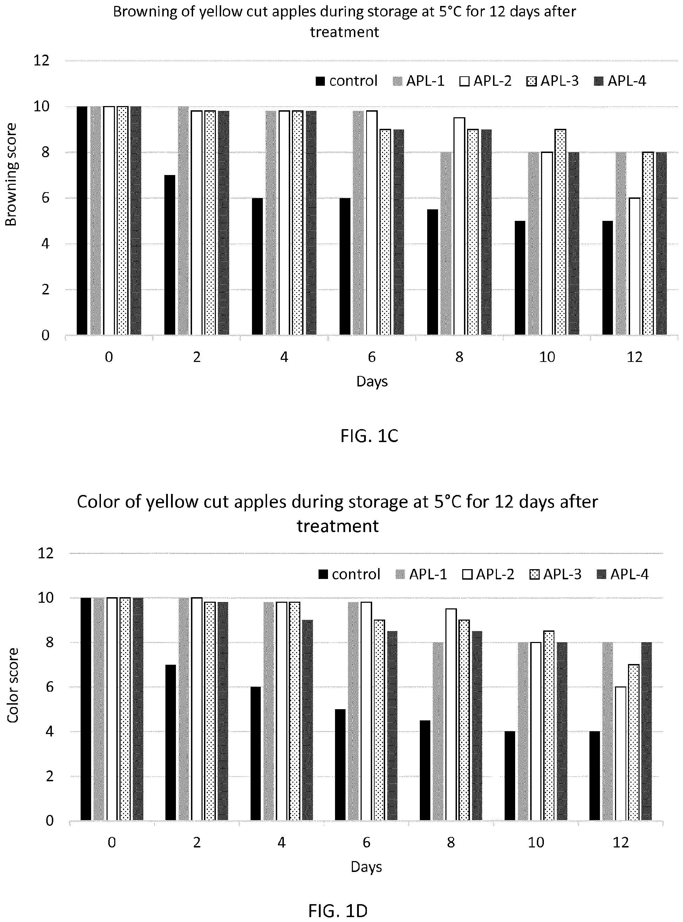

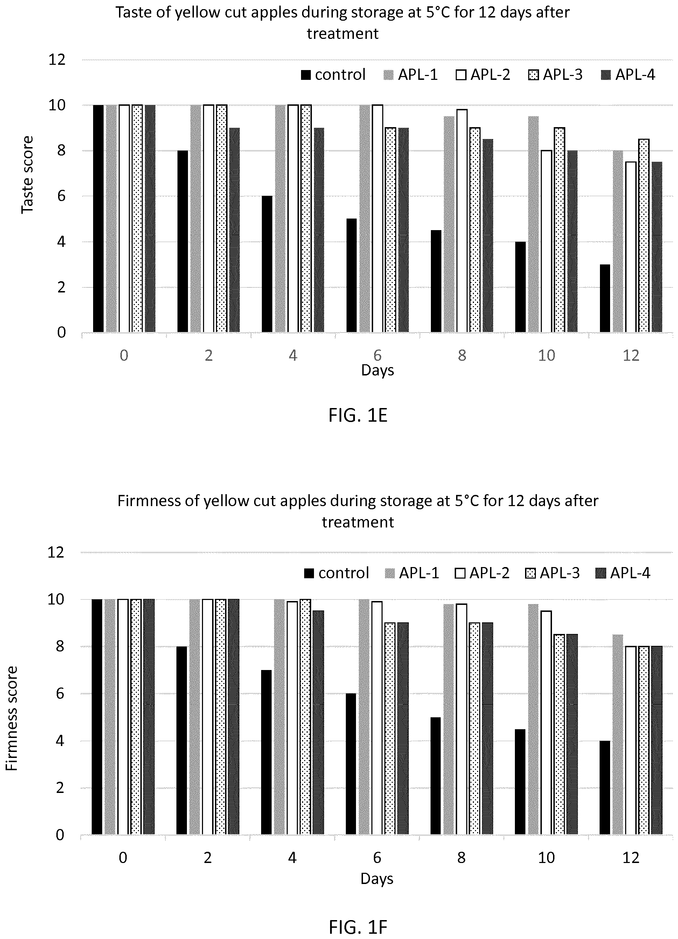

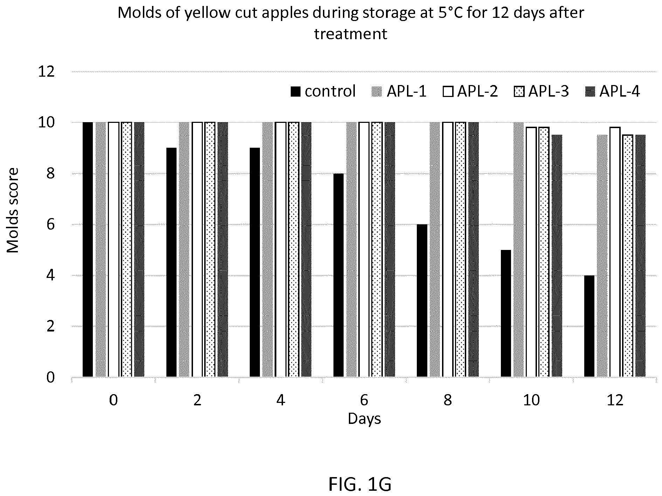

As can be seen in FIG. 1A, treated yellow cut apples lost less weight as compared to control. The sugar level of three out of four treated apples was higher than control (FIG. 1B). The browning, color, taste, firmness and mold scores of treated apples was higher than control (FIGs. 1C - 1G, respectively).

### Example 2 - evaluated shelf life parameters of red cut apples

Weight loss, sugar level, browning level, color, taste, firmness, and molds were evaluated in red cut apples during a period of 12 days at 5°C post treatment with formulation #1 and were compared to control (cut apples were dipped into water).

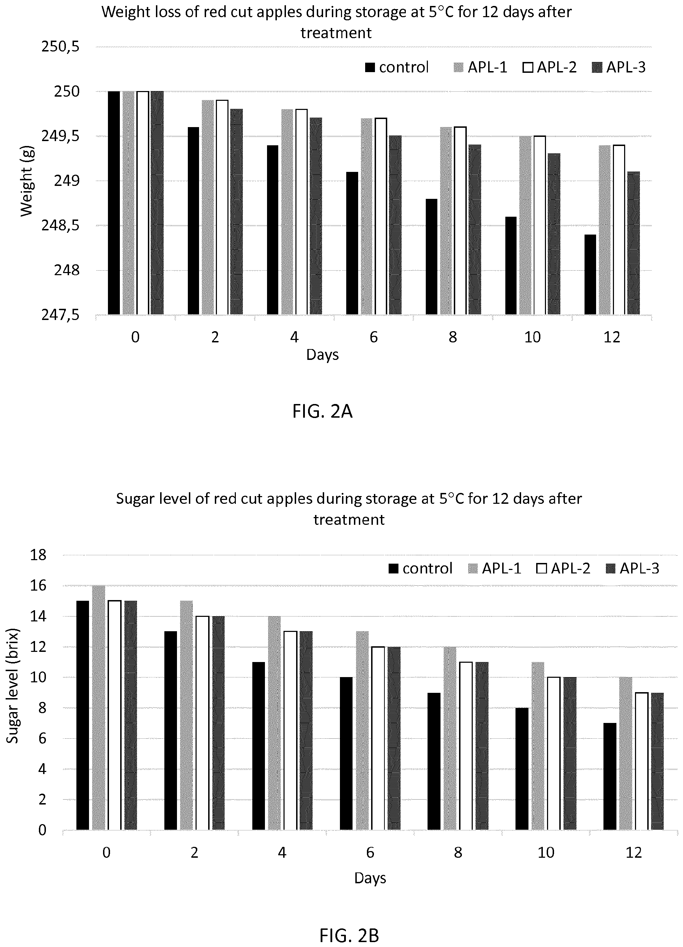

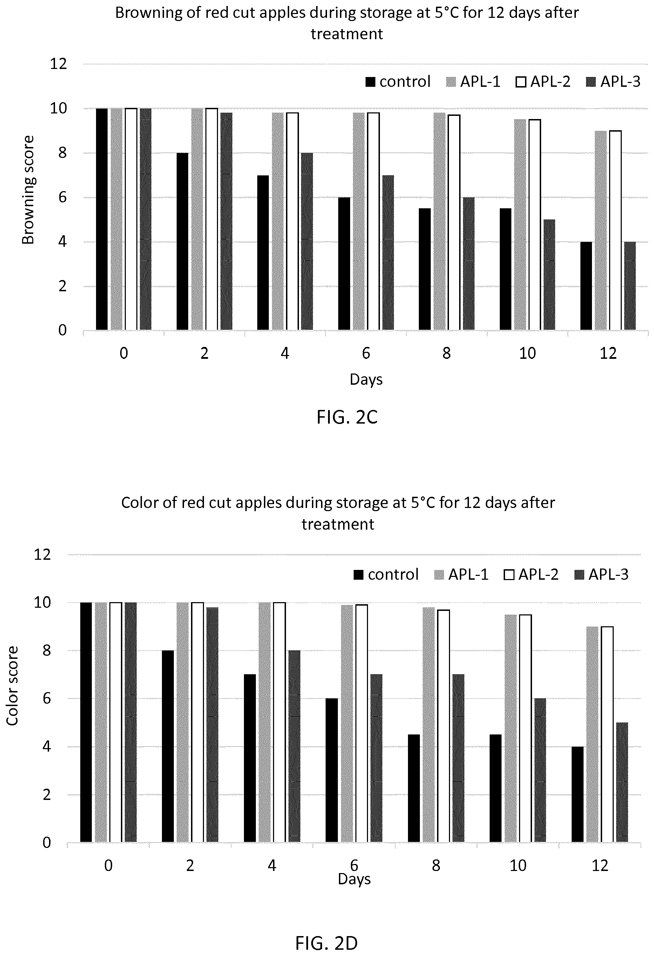

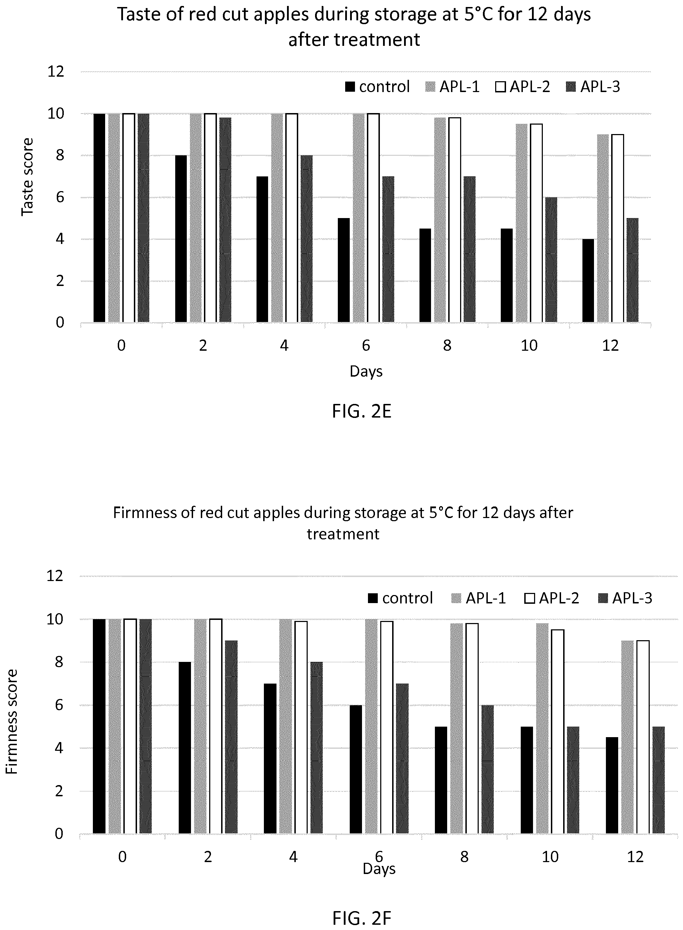

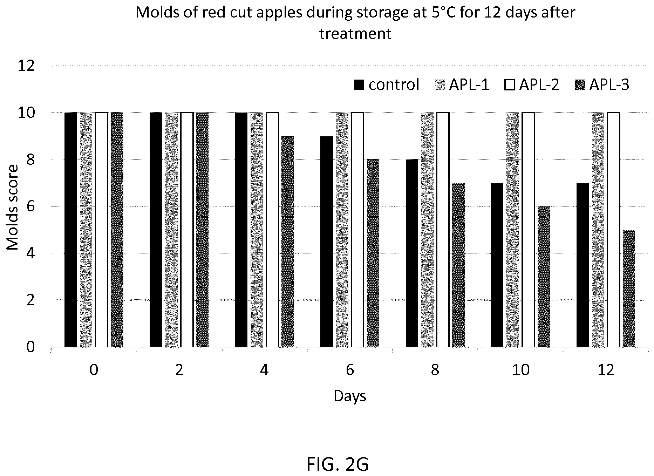

As can be seen in FIG. 2A, treated red cut apples lost less weight as compared to control. The sugar level of all treated apples was higher than control (FIG. 2B). The browning, color, taste, firmness, and mold scores of two out of three treated apples was higher than control (FIGs. 2C -2G, respectively). Formulation #1 wherein the sodium ascorbate was in a concentration of 1% and which was applied onto Apple no. 3 (APL-3) was less effective in inhibiting browning, color change, taste change, firmness maintenance, and appearance of molds. Thus, according to one or more embodiments, the sodium ascorbate is present in the composition in a concentration higher than 1%.

### Example 3 - evaluated shelf life parameters of green cut apples

Weight loss, sugar level, browning level, color, taste, firmness, and molds were evaluated in green cut apples during a period of 12 days at 5°C post treatment with formulation #1 and were compared to control (cut apples were dipped into water).

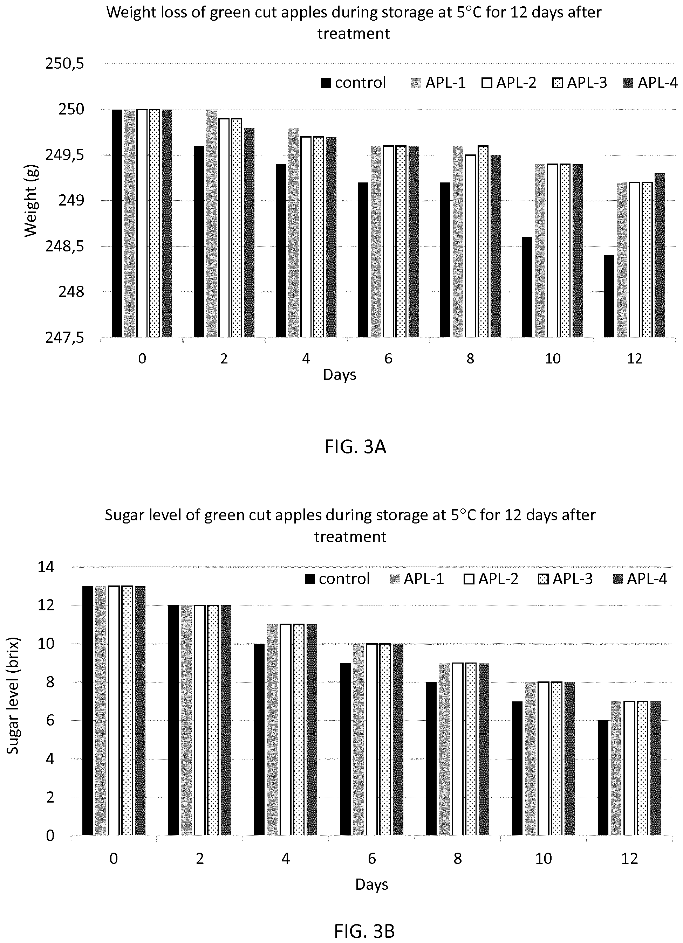

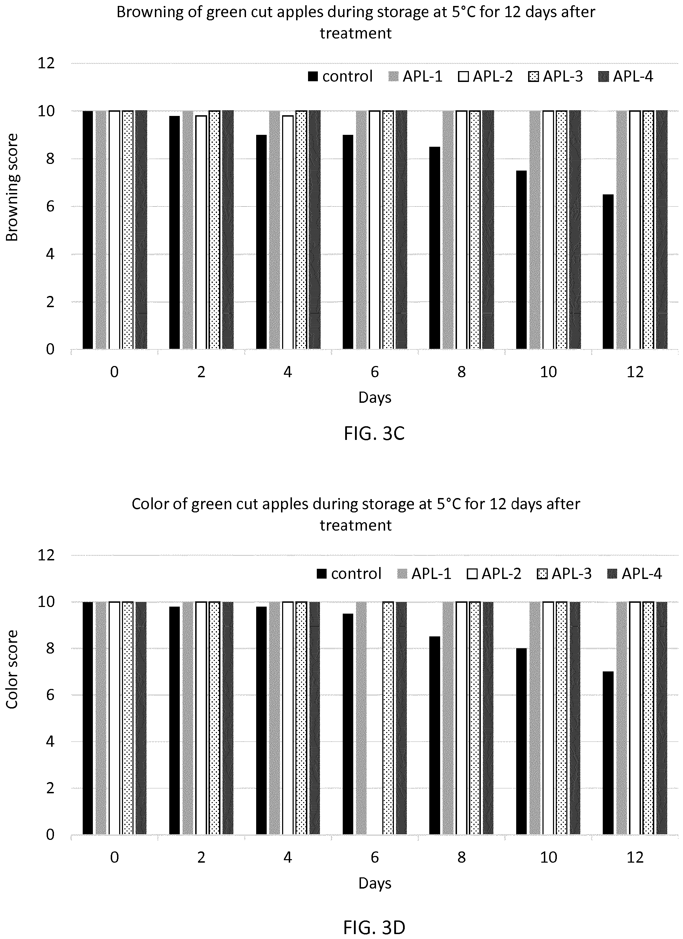

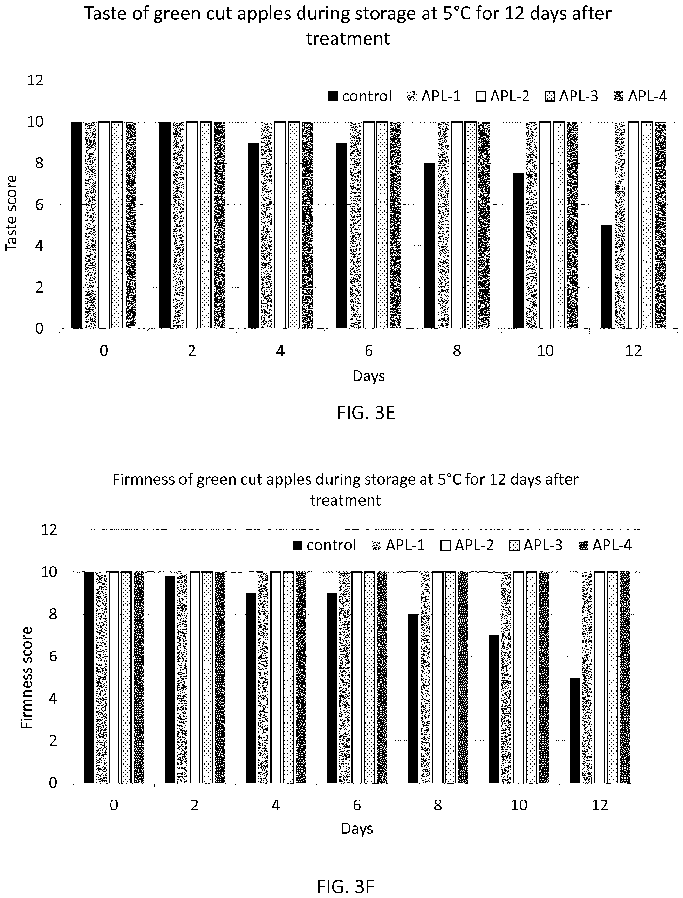

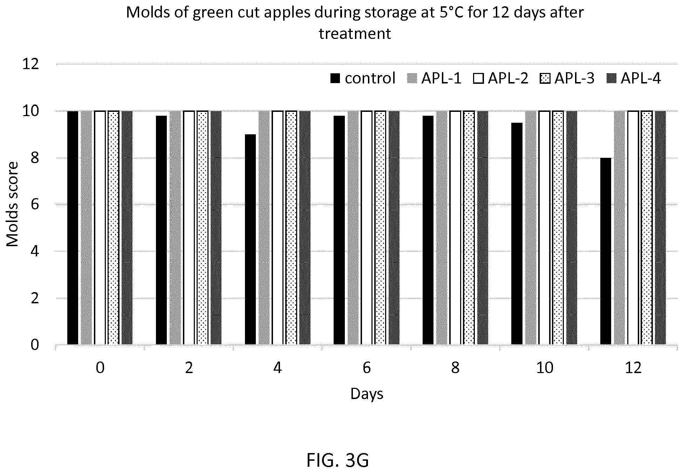

As can be seen in FIG. 3A, treated green cut apples lost less weight as compared to control. The sugar level of all treated apples was slightly higher than control (FIG. 3B). The browning, color, taste, firmness, and mold scores of all three treated apples was higher than control (FIGs. 3C- 3G, respectively). The above results clearly indicate that the herein disclosed formulation successfully extended the shelf green cut apples.

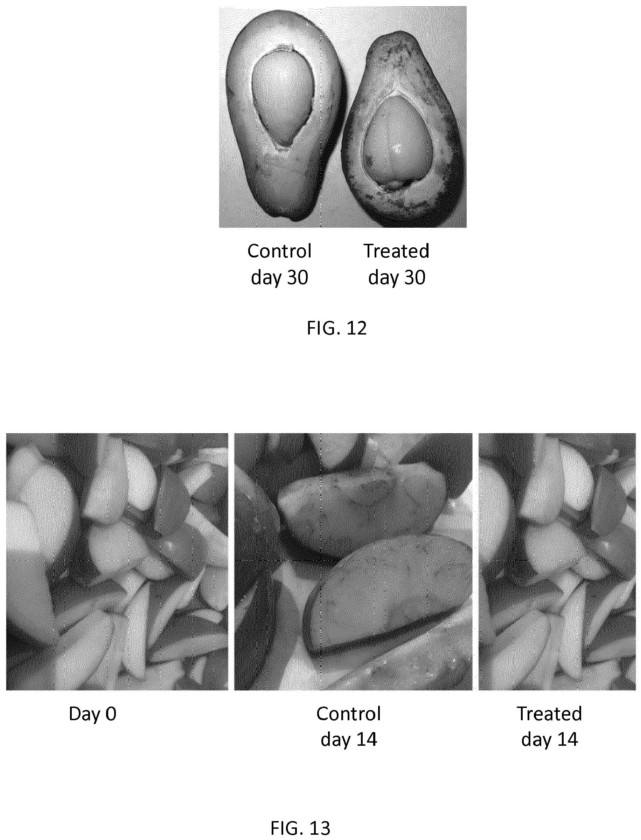

FIG. 13 illustrates images of sliced green apples on day 0, and on days 14 of treated vs. control sliced apples. The results clearly indicate that the composition had a significant impact on the shelf life extension of the apples.

### Example 4 - evaluated shelf life parameters of cut potatoes

Formulations comprising cysteine, algae, antioxidants, food preservatives and the fragrance agent dipropylene glycol in concentrations within the range as specified herein below in formulation #2 were prepared and applied onto cut potatoes.

The following formulation #2 contains:
Sodium ascorbate 1%-5%
Potassium sorbate 0.2%-3%
Calcium chloride 0.2%-1%
Cysteine 0.25%-1%
Algae 0.1-3%
Arabic gum 2%-5%
DMS 10% in dipropylene glycol 0.5%-3%; and
   purified water to 100%

Weight loss, sugar level, browning level, color, taste, firmness, and number of molds were evaluated in cut potatoes during a period of 12 days at 5°C post treatment and were compared to control.

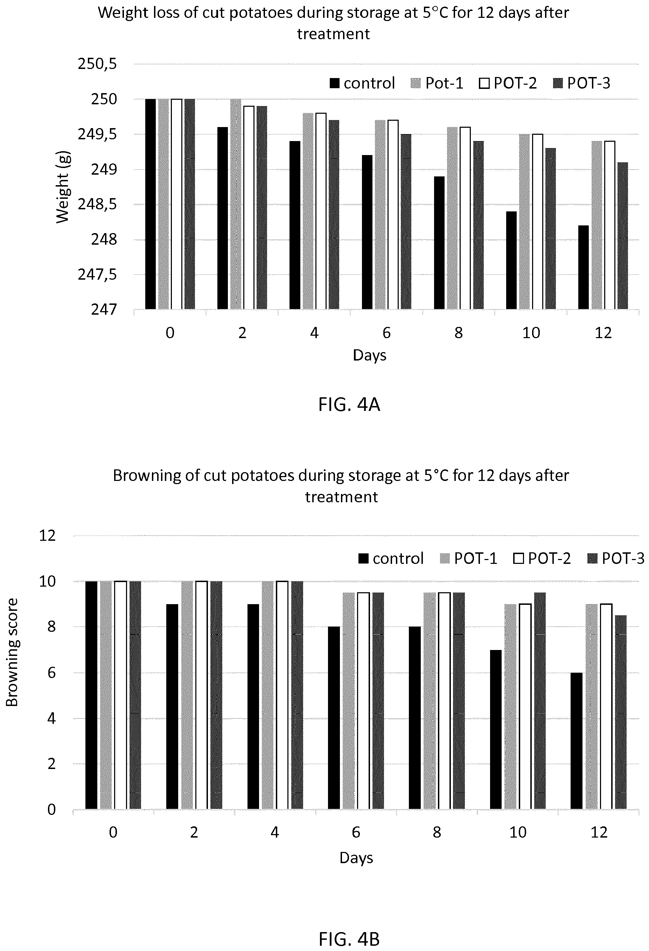

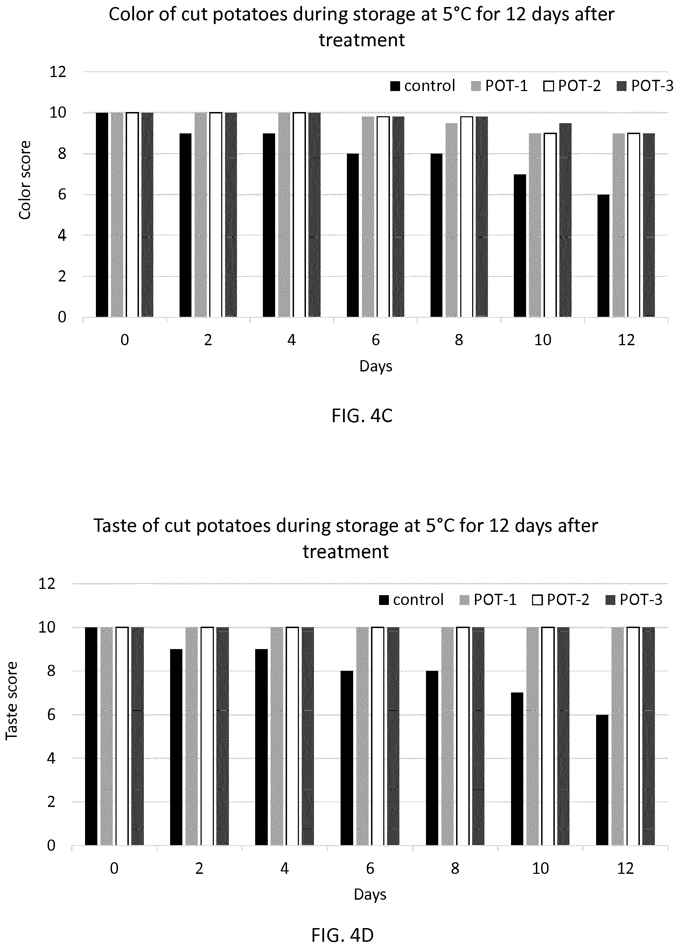

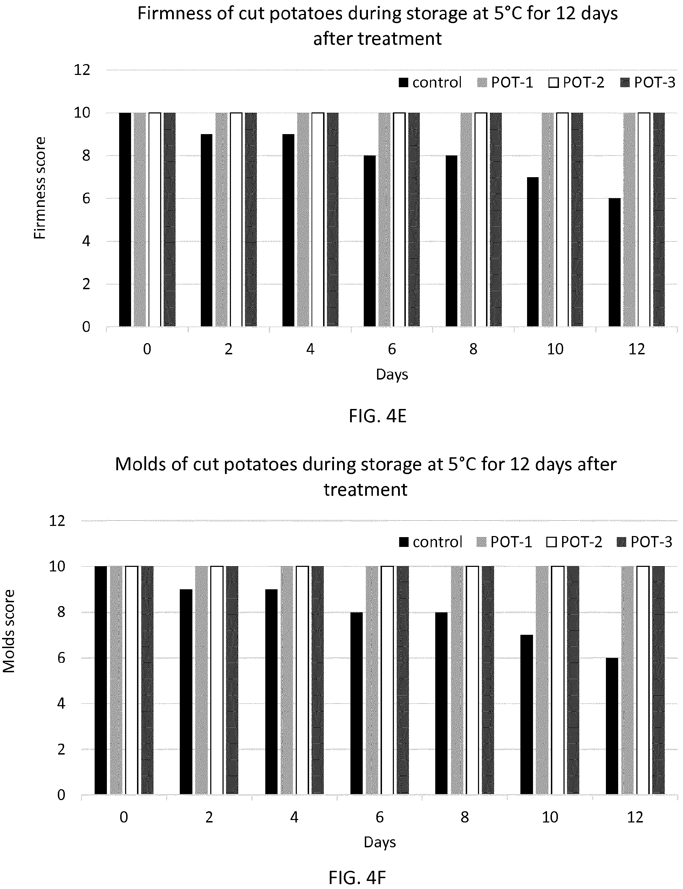

As can be seen in FIG. 4A, treated cut potatoes lost less weight as compared to control. The browning, color, taste, firmness, and mold scores of all three treated potatoes was higher than control (FIGs. 4B- 4F, respectively). The above results clearly indicate that the herein disclosed formulation successfully extended the shelf cut potatoes.

FIG. 9 are images of sliced potatoes on day 0 and of sliced potatoes treated with a formulation #2 vs. control on day 12. As can be seen, and in view of the above, the results clearly show that the herein disclosed formulation successfully extended the shelf life of potatoes.

### Example 5 - evaluated shelf life parameters of strawberry

Formulations comprising cysteine, algae, antioxidants, food preservatives and isobutyl-3-(methyl thio) butyrate in concentrations within the range as specified herein below in formulation #3 were prepared and applied onto strawberries.

The following formulation #3 contains:
Sodium ascorbate 1%-5%
Potassium sorbate 0.2%-3%
Cysteine 0.25%-1%
Algae 0.1-3%
Calcium chloride 0.2%-1%
Sodium caprylate 0.5%-1%
Arabic gum 2%-5%
isobutyl-3-(methyl thio) butyrate 0.5%-3%; and
water to 100%.

Weight loss, sugar level, color, taste, firmness, and molds were evaluated in strawberries during a period of 20 days at 5°C post treatment and were compared to control (strawberries were dipped into water).

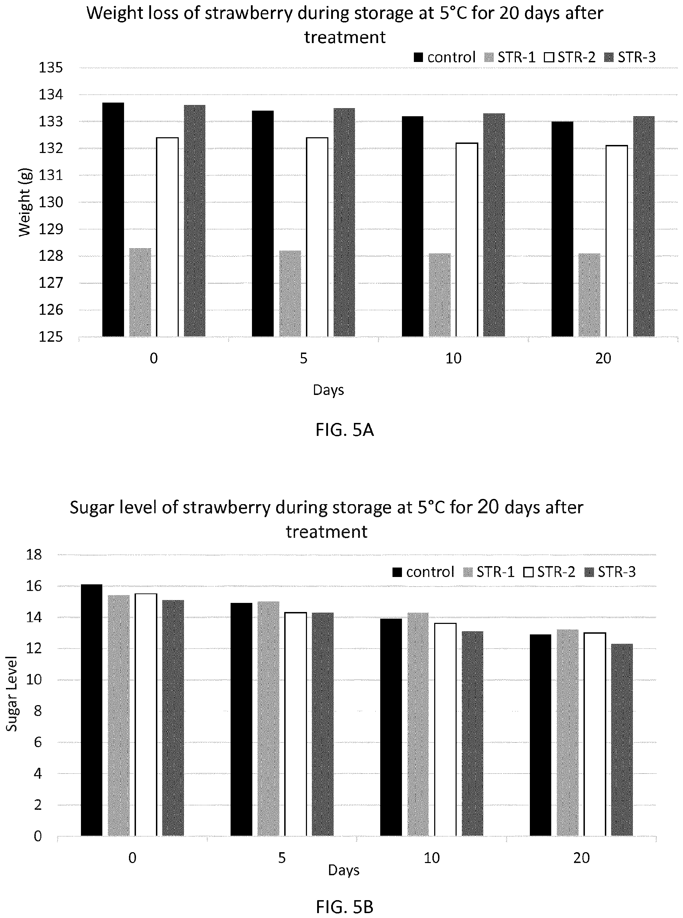

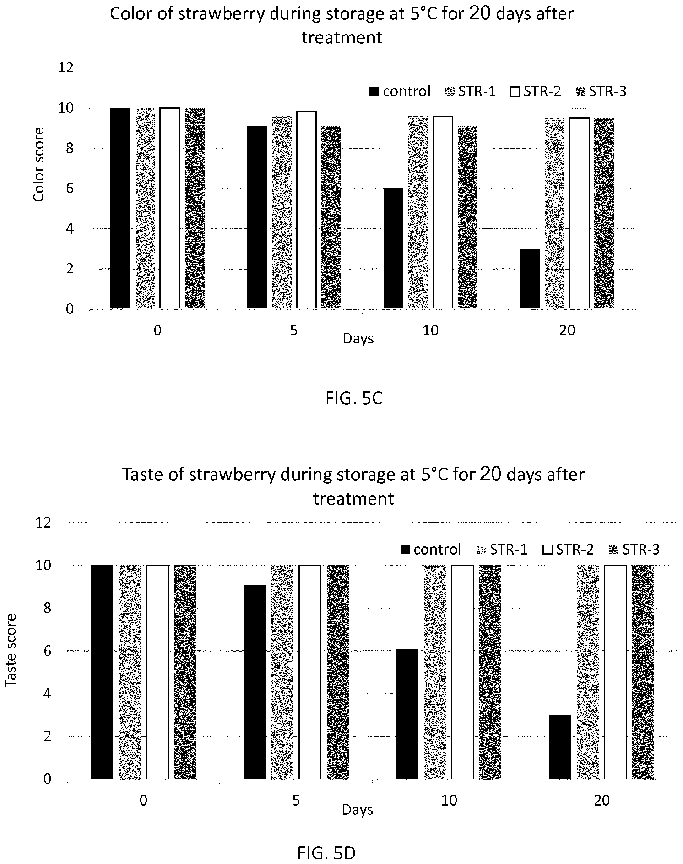

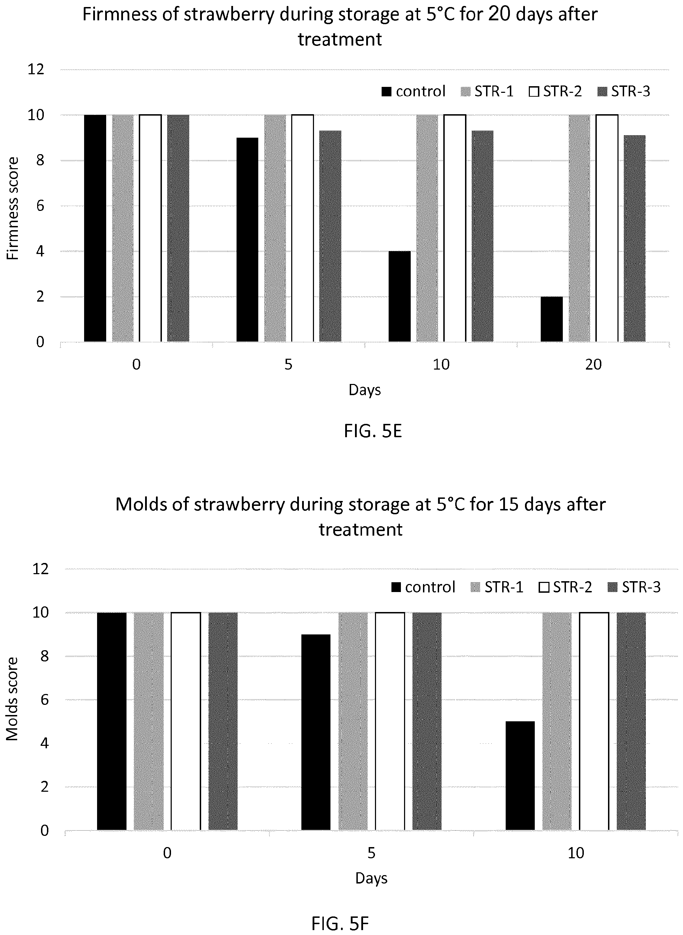

As can be seen in FIG. 5A, the strawberries of both the control and treated groups did not lose weight during the tested 20 days period.

Sugar levels were slightly lower after 20 days relative to first measurement and were relatively similar between specimens during the time period tested.

The color, taste, firmness, and mold scores of all three treated strawberry specimens was higher than control (FIGs. 5C- 5F, respectively).

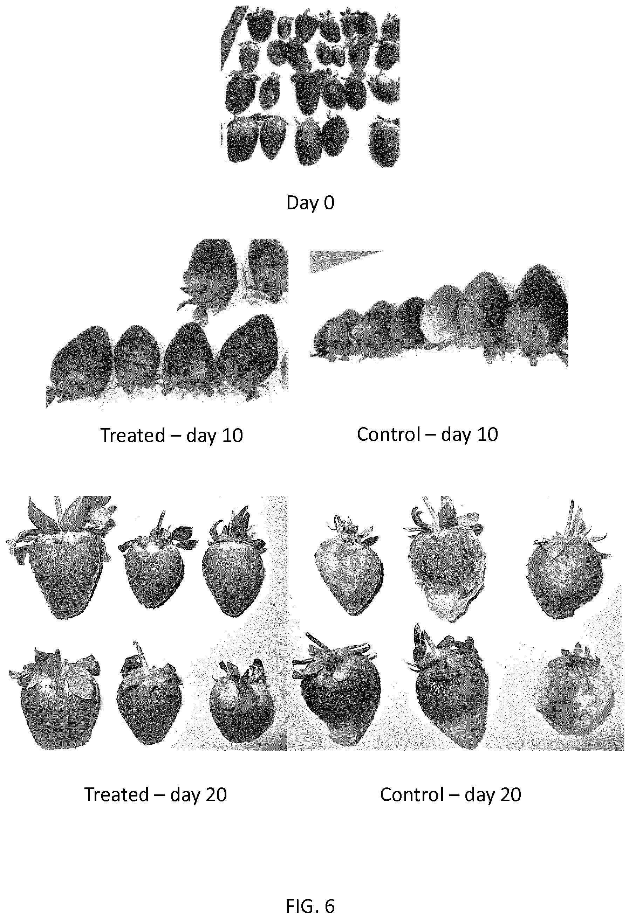

FIG. 6 illustrates the appearance of strawberries at day 0 and of treated vs. control strawberries following 10 and 20 days incubation at 5°C. Molds can be visualized in the control-treated strawberries. The above results clearly indicate that the herein disclosed formulation successfully extended the shelf life of strawberries.

### Example 6 - evaluated shelf life parameters of cut lettuce

Formulations comprising cysteine, algae, antioxidants, and food preservatives in concentrations within the range as specified herein below in formulation #4 were prepared and applied onto lettuce. Weight loss, browning level, color, taste, firmness, and molds were evaluated during a period of 14 days at 5°C post treatment and were compared to control (lettuce dipped into water).

The following formulation #4 contains:
Sodium ascorbate 1%-5%
Cysteine 0.25%-1%
Lipoic acid 0.14%-1%
Algae 0.1-3%
Starch 2%-5%
Potassium sorbate 0.2%-3%; and
water to 100%.

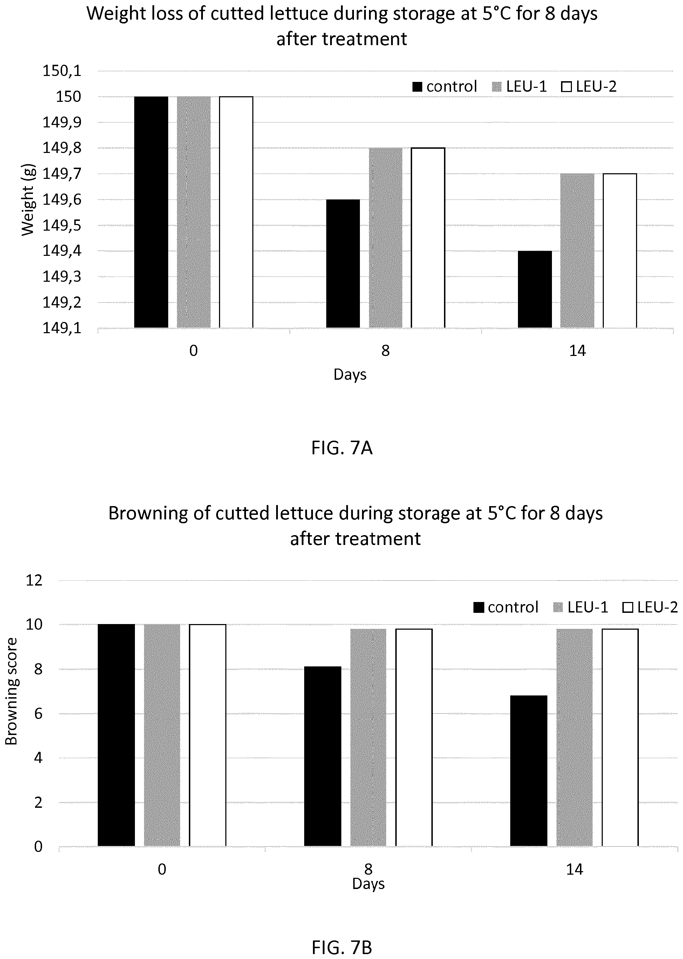

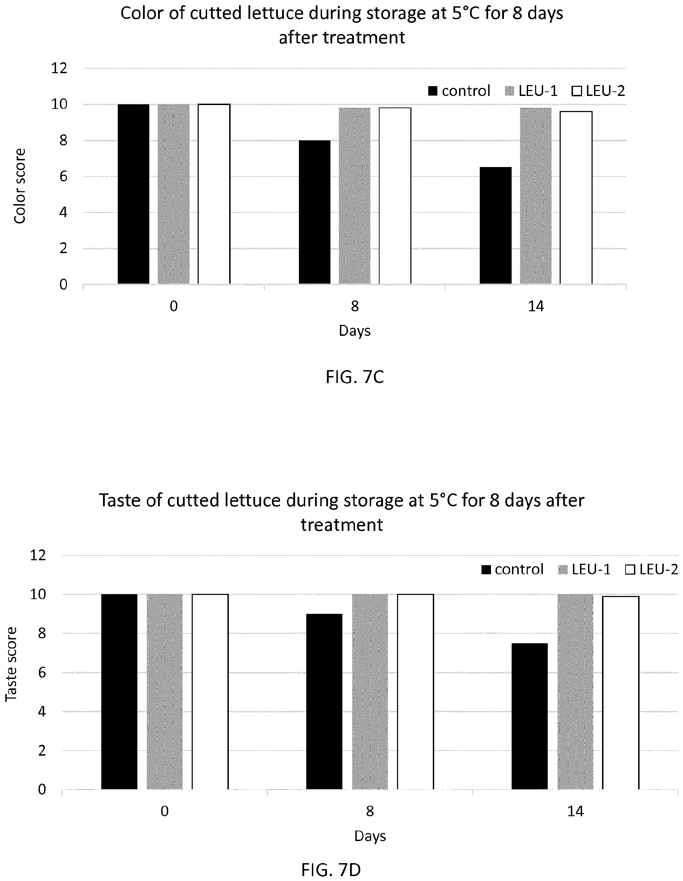

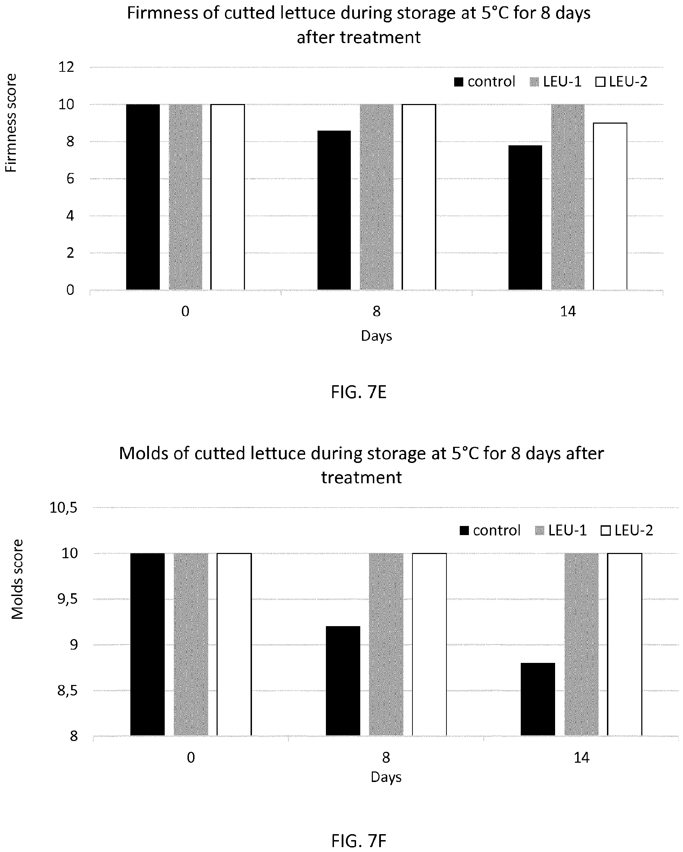

As can be seen in FIG. 7A, treated lettuce lost less weight as compared to control. The color, taste, firmness, browning and mold scores of lettuce was higher than control (FIGs. 7B- 7F, respectively).

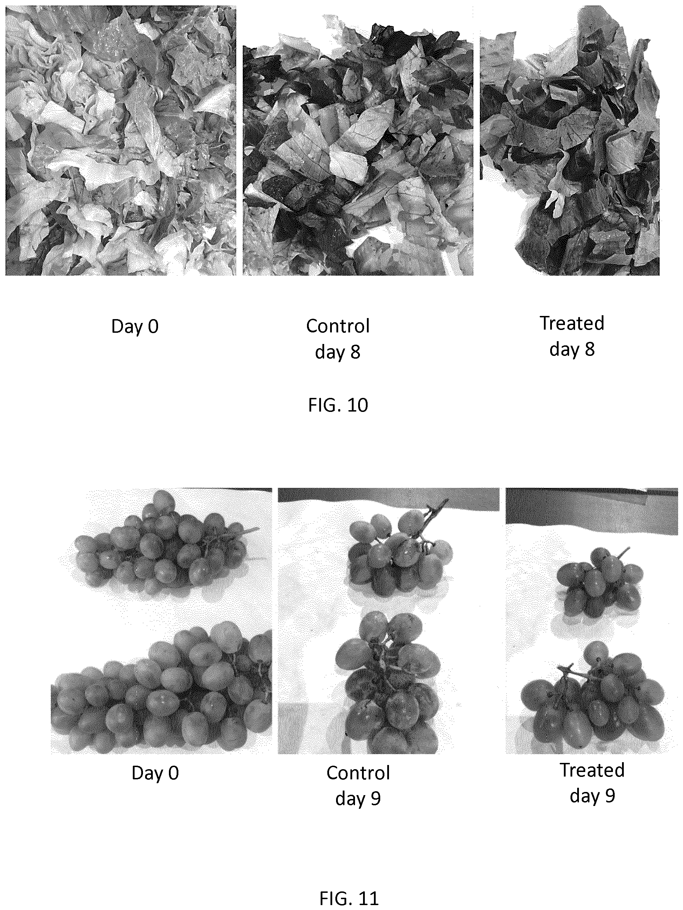

FIG.10 are images of sliced lettuce on day 0 and of sliced lettuce treated with a formulation #4 vs. control on the 8^{th} day. As can be seen, and in view of the above, the results clearly indicate that the herein disclosed formulation successfully extended the shelf life of sliced lettuce. Control lettuce had brown areas whereas treated lettuce appeared fresh even on the 8^{th} day post-harvest.

### Example 7- cysteine is an essential shelf life extending compound

FIG. 8 are images of sliced yellow apples treated with a formulation #1 that contains cysteine (left panel) vs. same formulation without any cysteine (right panel). As can be seen, cysteine effectively extends the shelf life of yellow apples.

### Example 8 -extended shelf life of grapes

Formulations comprising cysteine, algae, antioxidants, and food preservatives in concentrations within the range as specified herein below in formulation #5 were prepared and applied onto grapes. Images were taken following 9 days incubation at 5°C of treated and of control.

The following formulation #5 contains:
sodium ascorbate in an amount of between about 1% and about 5%;
potassium sorbate in an amount of between about 0.2% and about 3%;
lipoic acid in an amount of between about 0.14% and about 1%;
cysteine in an amount of between about 0.25% and about 1%;
algae in an amount of between about 0.1 and about 3%;
sodium caprylate in an amount of between about 0.5% and about 1%;
EDTA in an amount of between about 0.05% and about 2%;
isobutyl hexanoate in an amount of between about 0.5% and about 3%; and
purified water to 100%.

The images in FIG. 11 clearly show the effect of the herein above formulation on the shelf life extension of grapes. Control grapes had brown spots whereas treated grapes appeared fresh even on the 9^{th} day post-harvest.

### Example 9 -extended shelf life of avocado

Formulations comprising cysteine, algae, antioxidants, and food preservatives were prepared and applied onto an avocado. Images were taken following 30 days incubation at 5°C of treated and of control. The images in FIG. 12 clearly show the effect of the herein above formulation on the shelf life extension of avocado. Control avocados had brown dots whereas treated avocados appeared fresh even on the 30^{th} day post-harvest.

The foregoing description of the specific embodiments will so fully reveal the general nature of the invention that others can, by applying current knowledge, readily modify and/or adapt for various applications such specific embodiments without undue experimentation and without departing from the generic concept, and, therefore, such adaptations and modifications should and are intended to be comprehended within the meaning and range of equivalents of the disclosed embodiments. Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It should be understood that the detailed description and specific examples, while indicating preferred embodiments of the invention, are given by way of illustration only, since various changes and modifications within the spirit and scope of the invention will become apparent to those skilled in the art from this detailed description.

## Claims

1. A composition for extended shelf life of harvested crop, the composition comprising cysteine, and one or more of antioxidants, food preservatives, antimicrobial agents, and algae, in a carrier suitable for application to harvested crop.

2. The composition of claim 1, wherein the antioxidant is selected from the group consisting of: sodium ascorbate, lipoic acid, butylated hydroxyanisole (BHA), butylated hydroxytoluene (BHT), tertiary-butylated hydroquinone (TBHQ), propyl gallate, ascorbic acid, ascorbyl-6-palmitate, tocopherols and combinations thereof.

3. The composition of claim 1 or 2, wherein the food preservative is selected from the group consisting of: potassium sorbate, ethylene diamine tetra acetic acid (EDTA), sodium propionate, calcium propionate, benzoic acid, sodium benzoate, sodium bisulfite and combinations thereof.

4. The composition of any one of claims 1-3, wherein the antimicrobial agent is selected from the group consisting of sodium caprylate, propionic acid, sorbic acid, benzoic acid, parabens, sulphite, nitrite, diacetate, ethyl formate, ethylene oxide, propylene oxide, dehydroacetic acid, caprylic acid, acetic acid, lactic acid and combinations thereof.

5. The composition of any one of claims 1-4, wherein the composition further comprises at least one excipient selected from the group consisting of a flavoring agent, a fragrance agent, a thickening agent, a lubricating agent, a wetting agent, a surface active agent, a coating agent, a solubilizing agent, a coloring agent, a firming and/or sequestering agent, and combinations thereof.

6. The composition of claim 5, wherein the composition comprises at least one excipient selected from the group consisting of arabic gum, calcium chloride, chitosan, starch and a combination thereof.

7. The composition of any one of claims 1-6, wherein the composition comprises cysteine in an amount of about 0.1% to about 2%, wherein the percentages are weight percent based on the total weight of the composition and the total weight of the composition equals 100%.

8. The composition of any one of claims 1-7, wherein the composition comprises algae in an amount of about 0.05% to about 5%, wherein the percentages are weight percent based on the total weight of the composition and the total weight of the composition equals 100%.

9. The composition of any one of claims 1-8, wherein the composition comprises:
cysteine in an amount of at least about 0.1%;
algae in an amount of at least about 0.1% to about 3%;
at least one antioxidant in an amount of at least about 1%; and
an antimicrobial agent or a preservative agent in an amount of at least about 0.1%;
wherein the carrier is water, and wherein the percentages are weight percent based on the total weight of the composition and the total weight of the composition equals 100%.

10. The composition of any one of claims 1-9, wherein the composition comprises:
cysteine in an amount of about 0.1% to about 2%;
algae in an amount of about 0.1% to about 3%;
sodium ascorbate in an amount of about 0.1% to about 7%;
potassium sorbate in an amount of about 0.1% to about 4%; and
wherein the carrier is water, and wherein the percentages are weight percent based on the total weight of the composition and the total weight of the composition equals 100%.

11. The composition of any one of claims 1-10, wherein the harvested crop is selected from fruits, vegetables, and flowers, and portions thereof.

12. The composition of any one of claims 1-11, wherein the composition is a dosage form selected from the group consisting of a dissolving tablet, a suspension and a solution.

13. A method for enhancing the shelf life of a harvested crop, the method comprising applying onto the harvested crop a composition comprising cysteine, and one or more of antioxidants, food preservatives, antimicrobial agents, and algae, in a carrier suitable for application to harvested crop.

14. The method of claim 13, wherein applying the composition onto the harvested crop is performed by a dipping, rolling, brushing, wiping, rubbing, dripping, spraying, atomizing, or a combination thereof.

15. The method of claim 13, wherein the composition comprises:
cysteine in an amount of at least about 0.1%;
algae in an amount of at least about 0.1% to about 3%;
at least one antioxidant in an amount of at least about 1%; and
a preservative agent in an amount of at least about 0.1%;
wherein the carrier is water, and wherein the percentages are weight percent based on the total weight of the composition and the total weight of the composition equals 100%.
